# EUROPEAN PATENT SPECIFICATION

(11) **EP 4 191 083 B1**
(45) Date of publication and mention of the grant of the patent: **30.09.2026**
(21) Application number: 21848576.1
(22) Date of filing: 21.07.2021
(51) Int. Cl.: F16C 19/52, F16C 41/00, G08C 17/00, F16C 33/30, F16C 35/077, F16C 19/54

(54) **BEARING APPARATUS**
LAGERVORRICHTUNG
DISPOSITIF DE PALIER

(30) Priority: 27.07.2020 JP 2020126143
(43) Date of publication of application: 07.06.2023
(73) Proprietor: NTN Corporation, Osaka-shi, Osaka 530-0005 (JP)
(72) Inventor: HASHIZUME, Shohei, Kuwana-shi, Mie 511-8678 (JP); UEDA, Keiichi, Kuwana-shi, Mie 511-8678 (JP); HAMAKITA, Yasuyuki, Kuwana-shi, Mie 511-8678 (JP)
(74) Representative: Bockhorni & Brüntjen Partnerschaft Patentanwälte mbB
(86) International application number: PCT/JP2021/027286
(87) International publication number: WO 2022/024910

(56) References cited:
- AU-A1- 2012 276 745
- DE-A1- 102013 006 966
- JP-A- 2003 028 151
- JP-A- 2003 042 151
- JP-A- 2005 177 908
- JP-A- 2008 032 070
- JP-A- 2010 217 167
- JP-A- 2012 167 814
- JP-A- 2015 178 904
- JP-A- 2020 060 227
- US-A1- 2003 030 565
- US-A1- 2013 170 776
- US-A1- 2018 195 557
- US-B1- 6 535 135
- US-B2- 6 880 977

## Description

### TECHNICAL FIELD

This invention relates to a bearing apparatus including a wireless communication function.

### BACKGROUND ART

To a machine including a rolling mechanism or a swing mechanism employed in a main spindle or the like of a machine tool, in order to control the machine or to monitor a state of the machine, a detection device such as a sensor may be attached. In particular, in the machine including a rolling bearing, it is effective to detect characteristics in the vicinity of the bearing in the inside of the machine. Therefore, various sensors such as a rotation sensor and a temperature sensor are desirably arranged in the vicinity of the bearing in the inside of the machine.

Electrical wires have conventionally often been used for transmission of data detected by the sensors. Arrangement of electrical wires in the inside of the machine, however, may cause interference with another mechanism in the inside of the machine or lowering in function of that mechanism (for example, lowering in dimension accuracy or shape). Ease in assembly of the machine also becomes poor, which may also be a factor for lowering in productivity.

In order to address the problems as above, for example, Japanese Patent Laying-Open No. 2003-28151 (PTL 1) discloses a bearing apparatus in which a wireless sensor with an antenna is attached to an outer ring of a bearing and data detected by the wireless sensor is wirelessly transmitted to the outside over radio waves. In view of the fact that the bearing and peripheral components (a housing, a lid, and the like) are made of a metal (a magnetic material) through which radio waves are less likely to propagate, in the bearing apparatus, a space (a hole or a groove) for facilitating propagation of radio waves transmitted from the wireless sensor to the outside is provided in the housing located around a portion of attachment of the wireless sensor.

A similar bearing apparatus comprising sensors and wireless communication apparatus is described in document DE102013006966A1.

### CITATION LIST

### PATENT LITERATURE

PTL 1: Japanese Patent Laying-Open No. 2003-28151

### SUMMARY OF INVENTION

### TECHNICAL PROBLEM

As described above, in the bearing apparatus disclosed in Japanese Patent Laying-Open No. 2003-28151, a space (a hole or a groove) for facilitating propagation of radio waves is provided in the housing located around the portion of attachment of the wireless sensor.

In the housing around the bearing, however, another mechanism for cooling the bearing is normally provided. When interference with another mechanism occurs, a sufficient space may not be provided in the housing. When a space in a complicated shape is provided in the housing in order to avoid interference with another mechanism, there is a concern about poor accuracy in shape of the housing or increase in cost.

The present disclosure was made to solve the problems above, and an object thereof is to provide a bearing apparatus capable of wirelessly transmitting data to the outside without providing a space for facilitating propagation of radio waves in a component around a bearing.

### SOLUTION TO PROBLEM

(1) A bearing apparatus according to the present disclosure is accommodated in the inside of a cylindrical housing. The bearing apparatus includes a first bearing including an inner ring, an outer ring, and a plurality of rolling elements arranged between the inner ring and the outer ring, and a communication apparatus arranged between the first bearing and a second bearing different from the first bearing, the communication apparatus wirelessly communicating over electromagnetic waves. A non-magnetic region for passage of the electromagnetic waves is formed in any region between an inside surface of the housing and the inner ring.
(2) In one aspect, a self-generation apparatus arranged between the first bearing and the second bearing, the self-generation apparatus supplying electric power to the communication apparatus, is further provided.
(3) In one aspect, an outer diameter of the inner ring is formed to be equal to or smaller than an inner diameter of the outer ring. The non-magnetic region is formed in a region between the inner ring and the outer ring.
(4) In one aspect, the plurality of rolling elements are arranged at prescribed intervals from one another on a pitch circle circumference lying between the inner ring and the outer ring. A ratio occupied by the plurality of rolling elements on the pitch circle circumference is not lower than 40% and not higher than 90%.
(5) In one aspect, the plurality of rolling elements are made of a non-magnetic material.
(6) In one aspect, the non-magnetic material is silicon nitride.
(7) In one aspect, the plurality of rolling elements are made of a magnetic material.
(8) In one aspect, the magnetic material is high-carbon chromium steel.
(9) In one aspect, the bearing apparatus further includes a component arranged between an outside surface of the outer ring and the inside surface of the housing, the component being made of a non-magnetic material. The non-magnetic region is formed in a region between the outside surface of the outer ring and the inside surface of the housing.
(10) In one aspect, the communication apparatus wirelessly communicates over electromagnetic waves at a frequency higher than a revolution period of the rolling elements in rotation of the first bearing.

### ADVANTAGEOUS EFFECTS OF INVENTION

According to the present disclosure, a bearing apparatus capable of wirelessly transmitting data to the outside without a space for facilitating propagation of radio waves in a component around a bearing can be provided.

### BRIEF DESCRIPTION OF DRAWINGS

Fig. 1 is a cross-sectional view (No. 1) showing a schematic construction of a spindle apparatus including a bearing apparatus.
Fig. 2 is a block diagram showing an exemplary configuration of a communication module.
Fig. 3 is a diagram showing an exemplary arrangement of a rolling element within a bearing.
Fig. 4 is a cross-sectional view (No. 2) showing a schematic construction of a spindle apparatus including a bearing apparatus.
Fig. 5 is a cross-sectional view (No. 3) showing a schematic construction of a spindle apparatus including a bearing apparatus.

### DESCRIPTION OF EMBODIMENTS

An embodiment of the present disclosure will be described below with reference to the drawings. The same or corresponding elements in the drawings below have the same reference characters allotted and description thereof will not be repeated.

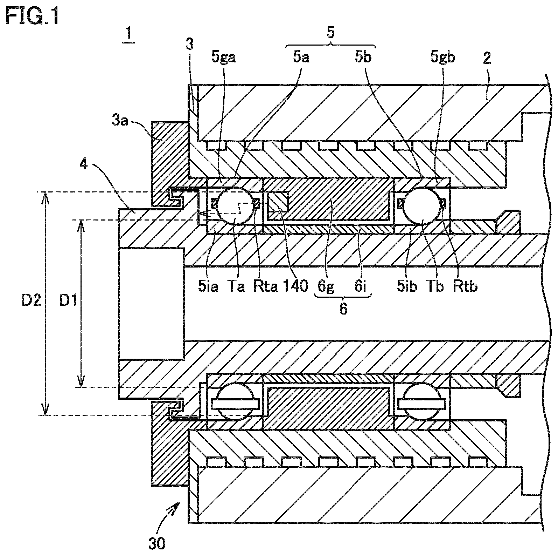

Fig. 1 is a cross-sectional view showing a schematic construction of a spindle apparatus 1 including a bearing apparatus 30 according to the present embodiment.

Spindle apparatus 1 shown in Fig. 1 is used, for example, as a built-in motor type spindle apparatus of a machine tool. In this case, a not-shown motor is incorporated on one end side (on the right side in Fig. 1) of a main spindle 4 supported by spindle apparatus 1 for a main spindle of a machine tool, and a not-shown cutting tool such as an end mill is connected to the other end (on the left side in Fig. 1). In the present embodiment, a diameter of main spindle 4 is set to 70 mm and a maximum rotation speed of main spindle 4 is set to 20000 rotations/minute.

Spindle apparatus 1 includes bearing apparatus 30. Bearing apparatus 30 includes a bearing 5 including two bearings 5a and 5b and a spacer 6 arranged between bearings 5a and 5b. Main spindle 4 is provided in a cylindrical housing 3 embedded in an inside portion of a bearing jacket 2 and rotatably supported by bearings 5a and 5b.

Bearing 5a is a rolling bearing including an inner ring 5ia made of a metal, an outer ring 5ga made of a metal, a plurality of rolling elements Ta arranged between inner ring 5ia and outer ring 5ga, and a retainer Rta. The plurality of rolling elements Ta are held at intervals by retainer Rta.

Bearing 5b is a rolling bearing including an inner ring 5ib made of a metal, an outer ring 5gb made of a metal, a plurality of rolling elements Tb arranged between inner ring 5ib and outer ring 5gb, and a retainer Rtb. The plurality of rolling elements Tb are held at intervals by retainer Rtb.

Inner ring 5ia of bearing 5a and inner ring 5ib of bearing 5b that are distant in an axial direction are fitted to main spindle 4 by interference fit (press-fitting).

Spacer 6 includes an inner-ring spacer 6i and an outer-ring spacer 6g. Inner-ring spacer 6i is arranged between inner rings 5ia and 5ib and outer-ring spacer 6g is arranged between outer rings 5ga and 5gb.

An angular contact ball bearing, a deep groove ball bearing, or a tapered roller bearing can be employed as bearings 5a and 5b. The angular contact ball bearing is included in bearing apparatus 30 shown in Fig. 1, where two bearings 5a and 5b are provided in back-to-back duplex bearing (DB) arrangement. Arrangement of the bearing is not limited to back-to-back duplex bearing arrangement, and for example, face-to-face duplex bearing arrangement may be applicable.

Though a structure in which two bearings 5a and 5b support main spindle 4 is illustrated and described, a structure in which two or more bearings support main spindle 4 may be applicable.

A cooling medium flow channel is provided in housing 3. By feeding a cooling medium between housing 3 and bearing jacket 2, bearings 5a and 5b can be cooled.

A communication module 140 containing a sensor is arranged between bearing 5a and bearing 5b. More specifically, communication module 140 is attached to outer-ring spacer 6g as being exposed at an end surface on a side of bearing 5a (on a side of the cutting tool) in the axial direction of outer-ring spacer 6g. A communication module similar to communication module 140 may be provided also in an end surface on a side of bearing 5b (a side of the motor) in the axial direction of outer-ring spacer 6g.

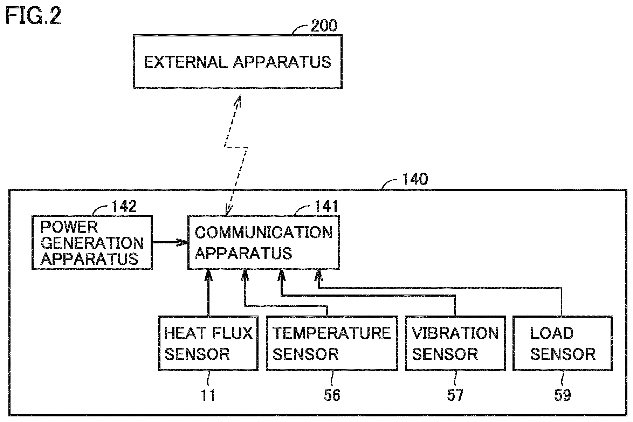

Fig. 2 is a block diagram showing an exemplary configuration of communication module 140 according to the present embodiment. Communication module 140 contains a plurality of sensors (a heat flux sensor 11 that measures a heat flux, a temperature sensor 56 that measures a temperature, a vibration sensor 57 that measures vibration, and a load sensor 59 that measures preload) for controlling main spindle 4 or monitoring a state of bearing apparatus 30, a communication apparatus 141, and a power generation apparatus 142.

Communication apparatus 141 is connected to each sensor through an electrical wire and collects data indicating a result of detection by each sensor. Communication apparatus 141 may wirelessly be connected to each sensor and wirelessly collect data indicating a result of detection by each sensor.

Communication apparatus 141 transmits data collected from each sensor to an external apparatus 200 provided outside bearing apparatus 30 through wireless communication over electromagnetic waves. In the present embodiment, communication apparatus 141 is in conformity with communication standards of Bluetooth^{®}, and wirelessly transmits data indicating a result of detection by each sensor to external apparatus 200 over radio waves in a frequency band of 2.4 GHz. External apparatus 200 is assumed to be arranged at a position on an outer side (the left side of bearing 5a in Fig. 1) in the axial direction of bearing 5a. Therefore, bearing 5a is present between communication apparatus 141 and external apparatus 200.

Power generation apparatus 142 is connected to communication apparatus 141 and self-generates electric power for driving communication apparatus 141. For example, a thermoelectric element (Peltier element) that generates electric power based on a Seebeck effect can be employed as power generation apparatus 142. When electric power is required for driving each sensor, power generation apparatus 142 may supply electric power to that sensor.

Though an example in which each sensor, communication apparatus 141, and power generation apparatus 142 are modularized into a single communication module 140 and arranged in outer-ring spacer 6g is described in the present embodiment, each sensor, communication apparatus 141, and power generation apparatus 142 may individually be arranged without being modularized.

### <As to Wireless Transmission of Data>

As described above, bearing apparatus 30 according to the present embodiment is constructed such that communication module 140 containing a plurality of sensors and communication apparatus 141 is arranged between bearing 5a and bearing 5b and wirelessly transmits data indicating a result of detection by each sensor to the outside.

Inner ring 5ia and outer ring 5ga of bearing 5a, however, are both made of a metal and radio waves are less likely to propagate therethrough. Furthermore, the plurality of rolling elements Ta arranged between inner ring 5ia and outer ring 5ga revolve as being in contact with inner ring 5ia and outer ring 5ga with rotation of inner ring 5ia. Therefore, if the plurality of rolling elements Ta are also made of a metal, passage of radio waves from communication module 140 to the outside of bearing 5a is difficult.

If a space for facilitating propagation of radio waves to a portion of housing 3 around bearing 5a is provided in a radial direction, interference with a cooling medium flow channel in housing 3 and additionally poorer accuracy in shape of housing 3 and increase in cost may disadvantageously be caused.

In view of such a disadvantage, in bearing apparatus 30 according to the present embodiment, as shown in Fig. 1, an outer dimension D1 of inner ring 5ia of bearing 5a is set to be smaller than an inner dimension D2 of outer ring 5ga of bearing 5a, so that a space is secured in a region lying between inner ring 5ia and outer ring 5ga. Then, silicon nitride (Si₃N₄ or the like) through which electromagnetic waves can pass is employed as a material for the plurality of rolling elements Ta arranged between inner ring 5ia and outer ring 5ga. A non-magnetic region required for passage of electromagnetic waves can thus be formed in a region lying between inner ring 5ia and outer ring 5ga of bearing 5a.

Thus, in bearing apparatus 30 according to the present embodiment, data from communication module 140 can wirelessly be transmitted to the outside of bearing apparatus 30 through the non-magnetic region between inner ring 5ia and outer ring 5ga of bearing 5a. Thus, without providing a space for facilitating propagation of radio waves in a component such as housing 3 arranged around bearing 5a, data can wirelessly be transmitted to the outside. Consequently, while interference with another mechanism around bearing 5a, poorer accuracy in shape of housing 3, or increase in cost is prevented, detection information from each sensor can wirelessly be transmitted to the outside of bearing apparatus 30.

Furthermore, in bearing apparatus 30 according to the present embodiment, similarly to communication apparatus 141, power generation apparatus 142 that self-generates electric power for driving communication apparatus 141 is arranged between bearing 5a and bearing 5b. Therefore, communication apparatus 141 can be driven without an electrical wire for supply of drive power to communication apparatus 141 being provided on the outside of bearing apparatus 30.

For wireless transmission of data also to the outside (the right side of bearing 5b in Fig. 1) in the axial direction of bearing 5b, bearing 5b should only be constructed similarly to bearing 5a. Specifically, the outer dimension of inner ring 5ib of bearing 5b should only be set to be smaller than the inner dimension of outer ring 5gb of bearing 5b to secure a space in a region lying between inner ring 5ib and outer ring 5gb, and then the plurality of rolling elements Tb arranged between inner ring 5ib and outer ring 5gb should only be made of silicon nitride.

The material for rolling element Ta or rolling element Tb should only be a non-magnetic material through which electromagnetic waves can pass, and is not limited to silicon nitride described above. For example, rolling element Ta or rolling element Tb may be made of a ceramic material such as alumina or zirconia, a resin material such as polyether ether ketone (PEEK) or polyphenylene sulfide (PPS), a material reinforced with carbon fibers or glass fibers, glass, or rubber.

So long as the non-magnetic region is secured in the space between inner ring 5ia and outer ring 5ga of bearing 5a by making the plurality of rolling elements Ta of the non-magnetic material, outer dimension D1 of inner ring 5ia of bearing 5a may be equal to inner dimension D2 of outer ring 5ga of bearing 5a.

### [First Modification]

In the embodiment described above, the non-magnetic region is formed between inner ring 5ia and outer ring 5ga by setting outer dimension D1 of inner ring 5ia of bearing 5a to be smaller than inner dimension D2 of outer ring 5ga and making rolling element Ta of the non-magnetic material.

In contrast, in the present second modification, while outer dimension D1 of inner ring 5ia of bearing 5a is set to be smaller than inner dimension D2 of outer ring 5ga as in the embodiment described above, the non-magnetic region is formed between inner ring 5ia and outer ring 5ga by setting a ratio occupied by the plurality of rolling elements Ta on a pitch circle circumference lying between inner ring 5ia and outer ring 5ga to be not lower than 40% and not higher than 90%. The construction is otherwise the same as in the embodiment described above.

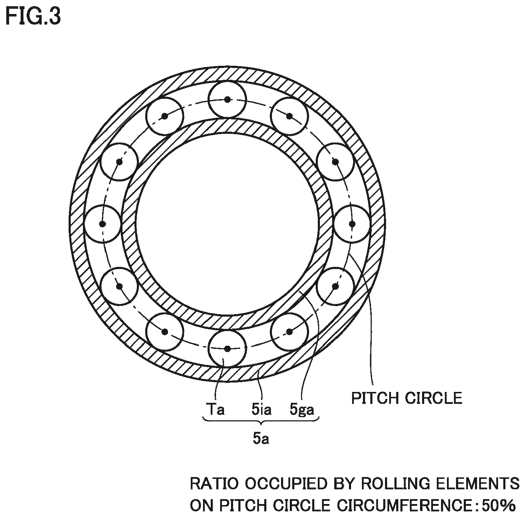

Fig. 3 is a diagram showing an exemplary arrangement of rolling element Ta within bearing 5a according to the present first modification. The plurality of rolling elements Ta are held by retainer Rta as being arranged at prescribed intervals on the pitch circle circumference lying between inner ring 5ia and outer ring 5ga.

Fig. 3 shows an example in which a ratio occupied by the plurality of rolling elements Ta on the pitch circle circumference is approximately 50%. While a load capacity of bearing 5a is secured by thus setting the ratio occupied by the plurality of rolling elements Ta on the pitch circle circumference to 50%, the non-magnetic region is formed by securing a space required for transmission of data between adjacent rolling elements Ta.

When the ratio occupied by the plurality of rolling elements Ta on the pitch circle circumference is lower than 40%, the load capacity of bearing 5a may be insufficient. When the ratio occupied by the plurality of rolling elements Ta on the pitch circle circumference exceeds 90%, the space required for wireless transmission of data cannot be secured between adjacent rolling elements Ta and the non-magnetic region cannot be formed. Therefore, the ratio occupied by the plurality of rolling elements Ta on the pitch circle circumference is desirably not lower than 40% and not higher than 90%. In particular, a range not lower than 50% in the range not lower than 40% and not higher than 90% is an optimal range within which the non-magnetic region is formed between adjacent rolling elements Ta while a sufficient load capacity of bearing 5a is secured.

When the ratio occupied by the plurality of rolling elements Ta on the pitch circle circumference is not lower than 40% and not higher than 90%, the space required for wireless transmission of data is secured between adjacent rolling elements Ta. Therefore, rolling element Ta can be made of a metal (magnetic material) instead of a non-magnetic material. For example, rolling element Ta can be made of high-carbon chromium steel excellent in wear resistance. Transmission of radio waves may further be facilitated by making rolling element Ta of the non-magnetic material. At least half rolling elements Ta of the plurality of rolling elements Ta may be made of the magnetic material and remaining rolling elements Ta may be made of the non-magnetic material.

Communication module 140 is in conformity with communication standards of Bluetooth^{®}, and transmits radio waves in a frequency band of 2.4 GHz. A frequency of revolution with respect to outer ring 5ga, of rolling elements Ta at the time when inner ring 5ia rotates at 20000 rotations/minute which is a maximum rotation speed of main spindle 4 is approximately from 100 to 150 Hz, and a frequency of transmitted radio waves is sufficiently higher than the frequency of revolution of rolling elements Ta. Therefore, radio waves from communication module 140 can sufficiently pass between rolling elements Ta also during rotation of inner ring 5ia.

As set forth above, the non-magnetic region may be formed between inner ring 5ia and outer ring 5ga by setting outer dimension D1 of inner ring 5ia of bearing 5a to be smaller than inner dimension D2 of outer ring 5ga while setting the ratio occupied by the plurality of rolling elements Ta on the pitch circle circumference lying between inner ring 5ia and outer ring 5ga to be not lower than 40% and not higher than 90%.

### [Second Modification]

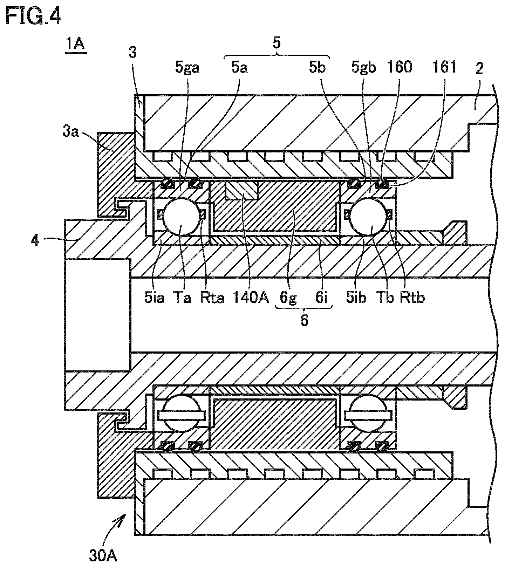

Fig. 4 is a cross-sectional view showing a schematic construction of a spindle apparatus 1A including a bearing apparatus 30A according to the present second modification. Bearing apparatus 30A is a bearing apparatus resulting from change of communication module 140 in bearing apparatus 30 shown in Fig. 1 described above to a communication module 140A and addition of an O-ring 160 made of a non-magnetic material. Spindle apparatus 1A and bearing apparatus 30A are otherwise the same in construction to spindle apparatus 1 and bearing apparatus 30 described above, respectively.

Communication module 140A is attached to outer-ring spacer 6g as being exposed at an outside surface of outer-ring spacer 6g. Communication module 140A is the same in basic configuration to communication module 140 described above.

In each of an outside surface of outer ring 5ga of bearing 5a and an outside surface of outer ring 5gb of bearing 5b, two circumferential grooves 161 extending in a circumferential direction are provided in parallel. Annular O-ring 160 made of a non-magnetic material is attached to circumferential groove 161. O-ring 160 should only be made of a non-magnetic material such as nitrile rubber or a resin.

By inserting such bearing apparatus 30A into housing 3, the non-magnetic region required for wireless transmission of data can be formed not only in the region between inner ring 5ia and outer ring 5ga of bearing 5a but also in a region between the outside surfaces of outer rings 5ga and 5gb of bearings 5a and 5b and an inside surface of housing 3.

Thus, in bearing apparatus 30A according to the present second modification, data from communication module 140A can wirelessly be transmitted to the outside of bearing apparatus 30A through the non-magnetic region formed in the region between inner ring 5ia and outer ring 5ga of bearing 5a and the non-magnetic region formed in the region between the outside surface of outer ring 5ga of bearing 5a and the inside surface of housing 3.

In bearing apparatus 30A according to the present second modification, the non-magnetic region is formed by providing O-ring 160 in the region between the outside surface of outer ring 5ga of bearing 5a and the inside surface of housing 3. Therefore, the region between inner ring 5ia and outer ring 5ga of bearing 5a does not necessarily have to be the non-magnetic region. In other words, in bearing apparatus 30A, rolling element Ta of bearing 5a may be made of a magnetic material such as a metal.

### [Third Modification]

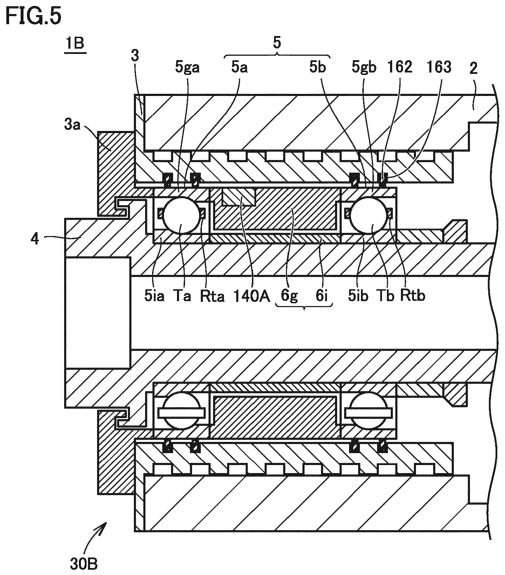

Fig. 5 is a cross-sectional view showing a schematic construction of a spindle apparatus 1B including a bearing apparatus 30B according to the present third modification. Bearing apparatus 30B is a bearing apparatus resulting from addition of a band 162 instead of O-ring 160 in bearing apparatus 30A shown in Fig. 4 described above. Spindle apparatus 1B and bearing apparatus 30B are otherwise the same in construction to spindle apparatus 1 and bearing apparatus 30 described above, respectively.

Portions in the inside surface of housing 3 where outer ring 5ga of bearing 5a and outer ring 5gb of bearing 5b are fitted are each provided with two circumferential grooves 163 extending in the circumferential direction in parallel. Annular band 162 made of a non-magnetic material is attached to circumferential groove 163. Band 162 should only be made of a non-magnetic material such as nitrile rubber or a resin.

In bearing apparatus 30B according to the present third modification as well, as in bearing apparatus 30A according to the second modification described above, the non-magnetic region required for wireless transmission of data can be formed not only in the region between inner ring 5ia and outer ring 5ga of bearing 5a but also in the region between the outside surfaces of outer rings 5ga and 5gb of bearings 5a and 5b and the inside surface of housing 3.

In bearing apparatus 30B according to the present third modification as well, as in bearing apparatus 30A according to the second modification described above, the non-magnetic region is formed in the region between the outside surface of outer ring 5ga of bearing 5a and the inside surface of housing 3. Therefore, the region between inner ring 5ia and outer ring 5ga of bearing 5a does not necessarily have to be the non-magnetic region. In other words, in bearing apparatus 30B, rolling element Ta of bearing 5a may be made of a magnetic material such as a metal.

### [Fourth Modification]

A component to be arranged between the outside surfaces of outer rings 5ga and 5gb of bearings 5a and 5b and the inside surface of housing 3 is not limited to an annular component such as O-ring 160 in the second modification described above or band 162 in the third modification. The space required for transmission of data may be secured, for example, by arranging a component in a strip shape or a component in a slip shape between the outside surface of the outer ring and the inside surface of the housing.

It should be understood that the embodiment disclosed herein is illustrative and non-restrictive in every respect. The invention is defined by the claims.

### REFERENCE SIGNS LIST

1 spindle apparatus; 2 bearing jacket; 3 housing; 4 main spindle; 5, 5a, 5b bearing; 5ga, 5gb outer ring; 5ia, 5ib inner ring; 6 spacer; 6g outer-ring spacer; 6i inner-ring spacer; 11 heat flux sensor; 30, 30A, 30B bearing apparatus; 56 temperature sensor; 57 vibration sensor; 59 load sensor; 140, 140A communication module, 141 communication apparatus; 142 power generation apparatus; 160 O-ring; 161, 163 circumferential groove; 162 band; 200 external apparatus; Rta, Rtb retainer; Ta, Tb rolling element

## Claims

1. A bearing apparatus (30, 30A, 30B) accommodated in inside of a cylindrical housing (3), the bearing apparatus (30, 30A, 30B) comprising:
a first bearing (5a) including an inner ring (5ia), an outer ring (5ga), and a plurality of rolling elements (Ta) arranged between the inner ring (5ia) and the outer ring (5ga); and
a communication apparatus (141) arranged between the first bearing (5a) and a second bearing (5b) different from the first bearing (5a), the communication apparatus (141) wirelessly communicating over electromagnetic waves, wherein
a non-magnetic region for passage of the electromagnetic waves is formed in any region between an inside surface of the housing (3) and the inner ring (5ia), wherein
the plurality of rolling elements (Ta) are arranged at prescribed intervals from one another on a pitch circle circumference lying between the inner ring (5ia) and the outer ring (5ga), and
a ratio occupied by the plurality of rolling elements (Ta) on the pitch circle circumference is not lower than 40% and not higher than 90%, **characterised in that**
the bearing apparatus (30, 30A, 30B) further comprises a spacer (6) including an inner-ring spacer (6i) and an outer-ring spacer (6g), wherein the outer-ring spacer (6g) is arranged between the outer ring (5ga) of the first bearing (5a) and an outer ring (5gb) of the second bearing (5b), and
the communication apparatus (141) is attached to the outer-ring spacer (6g) as being exposed at an outside surface of outer-ring spacer (6g).

2. The bearing apparatus (30, 30A, 30B) according to claim 1, further comprising a self-generation apparatus (142) arranged between the first bearing (5a) and the second bearing (5b), the self-generation apparatus (142) supplying electric power to the communication apparatus (141).

3. The bearing apparatus (30, 30A, 30B) according to claim 1, wherein
an outer diameter of the inner ring (5ia) is formed to be equal to or smaller than an inner diameter of the outer ring (5ga), and
the non-magnetic region is formed in a region lying between the inner ring (5ia) and the outer ring (5ga).

4. The bearing apparatus (30, 30A, 30B) according to claim 1 or 3, wherein
the plurality of rolling elements (Ta) are made of a non-magnetic material.

5. The bearing apparatus (30, 30A, 30B) according to claim 4, wherein
the non-magnetic material is silicon nitride.

6. The bearing apparatus (30, 30A, 30B) according to claim 1 or 3, wherein
the plurality of rolling elements (Ta) are made of a magnetic material.

7. The bearing apparatus (30, 30A, 30B) according to claim 6, wherein
the magnetic material is high-carbon chromium steel.

8. The bearing apparatus (30, 30A, 30B) according to any one of claims 1 or 2 or 4 to 7, further comprising a component (160, 162) arranged between an outside surface of the outer ring (5ga) and the inside surface of the housing (3), the component being made of a non-magnetic material, wherein
the non-magnetic region is formed in a region lying between the outside surface of the outer ring (5ga) and the inside surface of the housing (3).

9. The bearing apparatus (30, 30A, 30B) according to any one of claims 1 to 8, wherein
the communication apparatus wirelessly communicates over electromagnetic waves at a frequency higher than a revolution period of the rolling elements (Ta) in rotation of the first bearing (5a) at an allowable rotation speed.

## Patentansprüche

1. Lagervorrichtung (30, 30A, 30B), die im Inneren eines zylindrischen Gehäuses (3) untergebracht ist, wobei die Lagervorrichtung (30, 30A, 30B) umfasst:
ein erstes Lager (5a), das einen Innenring (5ia), einen Außenring (5ga) und eine Vielzahl von Wälzelementen (Ta), die zwischen dem Innenring (5ia) und dem Außenring (5ga) angeordnet sind, umfasst; und
eine Kommunikationsvorrichtung (141), die zwischen dem ersten Lager (5a) und einem zweiten Lager (5b), das sich von dem ersten Lager (5a) unterscheidet, angeordnet ist, wobei die Kommunikationsvorrichtung (141) drahtlos über elektromagnetische Wellen kommuniziert, wobei
ein nichtmagnetischer Bereich für den Durchgang der elektromagnetischen Wellen in einem beliebigen Bereich zwischen einer Innenfläche des Gehäuses (3) und dem Innenring (5ia) ausgebildet ist, wobei
die Vielzahl von Wälzelementen (Ta) in vorgeschriebenen Intervallen voneinander auf einem Teilkreisumfang angeordnet sind, der zwischen dem Innenring (5ia) und dem Außenring (5ga) liegt, und
ein Verhältnis, das von der Vielzahl von Wälzelementen (Ta) auf dem Teilkreisumfang eingenommen wird, nicht niedriger als 40 % und nicht höher als 90 % ist, **dadurch gekennzeichnet, dass**
die Lagervorrichtung (30, 30A, 30B) ferner einen Abstandshalter (6) umfasst, der einen Innenringabstandshalter (6i) und einen Außenringabstandshalter (6g) umfasst, wobei der Außenringabstandshalter (6g) zwischen dem Außenring (5ga) des ersten Lagers (5a) und einem Außenring (5gb) des zweiten Lagers (5b) angeordnet ist, und
die Kommunikationsvorrichtung (141) an dem Außenringabstandshalter (6g) so angebracht ist, dass sie an einer Außenfläche des Außenringabstandshalters (6g) freiliegt.

2. Lagervorrichtung (30, 30A, 30B) nach Anspruch 1, ferner umfassend eine Selbsterzeugungsvorrichtung (142), die zwischen dem ersten Lager (5a) und dem zweiten Lager (5b) angeordnet ist, wobei die Selbsterzeugungsvorrichtung (142) der Kommunikationsvorrichtung (141) elektrische Energie zuführt.

3. Lagervorrichtung (30, 30A, 30B) nach Anspruch 1, wobei
ein Außendurchmesser des Innenrings (5ia) so ausgebildet ist, dass er gleich oder kleiner als ein Innendurchmesser des Außenrings (5ga) ist, und
der nichtmagnetische Bereich in einem Bereich ausgebildet ist, der zwischen dem Innenring (5ia) und dem Außenring (5ga) liegt.

4. Lagervorrichtung (30, 30A, 30B) nach Anspruch 1 oder 3, wobei
die Vielzahl von Wälzelementen (Ta) aus einem nichtmagnetischen Material hergestellt ist.

5. Lagervorrichtung (30, 30A, 30B) nach Anspruch 4, wobei
das nichtmagnetische Material Siliziumnitrid ist.

6. Lagervorrichtung (30, 30A, 30B) nach Anspruch 1 oder 3, wobei
die Vielzahl von Wälzelementen (Ta) aus einem magnetischen Material hergestellt ist.

7. Lagervorrichtung (30, 30A, 30B) nach Anspruch 6, wobei
das magnetische Material Chromstahl mit hohem Kohlenstoffgehalt ist.

8. Lagervorrichtung (30, 30A, 30B) nach einem der Ansprüche 1 oder 2 oder 4 bis 7, ferner umfassend eine Komponente (160, 162), die zwischen einer Außenfläche des Außenrings (5ga) und der Innenfläche des Gehäuses (3) angeordnet ist, wobei die Komponente aus einem nichtmagnetischen Material hergestellt ist, wobei
der nichtmagnetische Bereich in einem Bereich ausgebildet ist, der zwischen der Außenfläche des Außenrings (5ga) und der Innenfläche des Gehäuses (3) liegt.

9. Lagervorrichtung (30, 30A, 30B) nach einem der Ansprüche 1 bis 8, wobei
die Kommunikationsvorrichtung drahtlos über elektromagnetische Wellen mit einer Frequenz kommuniziert, die höher als eine Umdrehungsperiode der Wälzelemente (Ta) bei der Drehung des ersten Lagers (5a) mit einer zulässigen Drehgeschwindigkeit ist.

## Revendications

1. Appareil de type palier (30, 30A, 30B) logé à l'intérieur d'un boîtier cylindrique (3), l'appareil de type palier (30, 30A, 30B) comprenant :
un premier palier (5a) incluant une bague intérieure (5ia), une bague extérieure (5ga), et une pluralité d'éléments de roulement (Ta) agencés entre la bague intérieure (5ia) et la bague extérieure (5ga) ; et
un appareil de communication (141) agencé entre le premier palier (5a) et un deuxième palier (5b) différent du premier palier (5a), l'appareil de communication (141) communicant de manière non filaire via des ondes électromagnétiques, dans lequel
une région non-magnétique destinée au passage des ondes électromagnétiques est formée dans une région quelconque entre une surface intérieure du boîtier (3) et la bague intérieure (5ia), dans lequel
la pluralité d'éléments de roulement (Ta) sont agencés à des intervalles prescrits les uns par rapport aux autres sur une circonférence de cercle primitif se trouvant entre la bague intérieure (5ia) et la bague extérieure (5ga), et
un rapport occupé par la pluralité d'éléments de roulement (Ta) sur la circonférence de cercle primitif n'est pas inférieur à 40 % et n'est pas supérieur à 90 %,
**caractérisé en ce que**
l'appareil de type palier (30, 30A, 30B) comprend en outre un distanceur (6) incluant un distanceur de bague intérieure (6i) et un distanceur de bague extérieure (6g), le distanceur de bague extérieure (6g) étant agencé entre la bague extérieure (5ga) du premier palier (5a) et une bague extérieure (5gb) du deuxième palier (5b), et
l'appareil de communication (141) est attaché au distanceur de bague extérieure (6g) tel qu'exposé au niveau d'une surface extérieure du distanceur de bague extérieure (6g).

2. Appareil de type palier (30, 30A, 30B) selon la revendication 1, comprenant en outre un appareil d'autogénération (142) agencé entre le premier palier (5a) et le deuxième palier (5b), l'appareil d'autogénération (142) fournissant une puissance électrique à l'appareil de communication (141).

3. Appareil de type palier (30, 30A, 30B) selon la revendication 1, dans lequel un diamètre extérieur de la bague intérieure (5ia) est formé de manière à être égal ou inférieur à un diamètre intérieur de la bague extérieure (5ga), et
la région non-magnétique est formée dans une région se trouvant entre la bague intérieure (5ia) et la bague extérieure (5ga).

4. Appareil de type palier (30, 30A, 30B) selon la revendication 1 ou 3, dans lequel la pluralité d'éléments de roulement (Ta) sont réalisés à partir d'un matériau non-magnétique.

5. Appareil de type palier (30, 30A, 30B) selon la revendication 4, dans lequel le matériau non-magnétique est du nitrure de silicium.

6. Appareil de type palier (30, 30A, 30B) selon la revendication 1 ou 3, dans lequel la pluralité d'éléments de roulement (Ta) sont réalisés à partir d'un matériau magnétique.

7. Appareil de type palier (30, 30A, 30B) selon la revendication 6, dans lequel le matériau magnétique est un acier au chrome à haute teneur en carbone.

8. Appareil de type palier (30, 30A, 30B) selon l'une quelconque des revendications 1 ou 2 ou 4 à 7, comprenant en outre un composant (160, 162) agencé entre une surface extérieure de la bague extérieure (5ga) et la surface intérieure du boîtier (3), le composant étant réalisé à partir d'un matériau non-magnétique, dans lequel
la région non-magnétique est formée dans une région se trouvant entre la surface extérieure de la bague extérieure (5ga) et la surface intérieure du boîtier (3).

9. Appareil de type palier (30, 30A, 30B) selon l'une quelconque des revendications 1 à 8, dans lequel
l'appareil de communication communique de manière non filaire via des ondes électromagnétiques à une fréquence supérieure à une période de rotation des éléments de roulement (Ta) du premier palier (5a) en rotation à une vitesse de rotation admissible.
